# EUROPÄISCHE PATENTANMELDUNG

(11) **EP 4 564 057 A1**
(43) Veröffentlichungstag der Anmeldung: **04.06.2025**
(21) Anmeldenummer: 23213251.4
(22) Anmeldetag: 30.11.2023
(51) Int. Cl.: G01S 13/86, G01S 13/88

(54) **VERFAHREN ZUR OBJEKTIDENTIFIZIERUNG UND EINE SENSORPLATTFORM**

(71) Anmelder: HENSOLDT Sensors GmbH, 82024 Taufkirchen (DE)
(72) Erfinder: SANDER, Jörg, 89075 Ulm (DE); BLECKMANN, Matthias, 84172 Buch a. Erbach (DE)
(74) Vertreter: LifeTech IP Spies & Behrndt Patentanwälte PartG mbB

(57) **Zusammenfassung**

Es ist ein Verfahren, zum Identifizieren eines Objektes als ein getarntes militärisches Objekt, offenbart. Das Verfahren umfasst: Erfassen (S110) einer Anomalie in einem Magnetfeld in einem Bereich; Erfassen (S120) eines Bildes von dem Bereich; Erfassen (S130) von hochfrequenz-Signalen, HF-Signalen, von dem Bereich; und Analysieren (S140) des erfassten Bildes oder der erfassten HF-Signale, um das Objekt als ein getarntes militärisches Objekt in dem Bereich zu identifizieren.

## Beschreibung

Die vorliegende Erfindung bezieht sich auf ein Verfahren zur Objektidentifizierung und auf eine Sensorplattform.

### HINTERGRUND

In modernen Waffensystemen werden zunehmend gelenkte Munition (z.B. Raketen) verwendet, wozu vollständig gelenkte oder auch nur endphasig gelenkte Munition zählt. Auf diese Waffensysteme wird häufig mit einer Tarnung von Landsystemen und Seesystemen (Objekte) reagiert, um eine Ansteuerung durch die Munition möglichst schwer oder unmöglich zu machen.

Aufgrund der Tarnung wird eine Aufklärung der getarnten Objekte zunehmend schwierig. Dies trifft insbesondere deshalb zu, da neben den bisherigen Tarnungen, die eine optische Aufklärung erschweren, die Systeme mittlerweile auch gegen Radarsysteme getarnt werden. Gleichzeitig ist es wichtig, dass die gelenkte Munition vor allem für militärische wertvolle Objekte genutzt wird, um diese zu neutralisieren.

Daher besteht ein Bedarf nach Verfahren zur Erkennung und möglicherweise Identifizierung von Objekten, um sie als militärische Objekte oder zivile Objekte zu klassifizieren. Ebenso besteht ein Bedarf nach Sensorplattformen, die eine zuverlässige Erkennung von militärischen Waffensystemen ermöglichen und zu deren Unterscheidung von zivilen Systemen oder zivilen Fahrzeugen eingesetzt werden können.

### KURZBESCHREIBUNG DER ERFINDUNG

Zumindest ein Teil der obengenannten Probleme wird durch ein Verfahren zur Objektidentifizierung nach Anspruch 1 und eine Sensorplattform nach Anspruch 9 gelöst. Die abhängigen Ansprüche beziehen sich auf weitere vorteilhafte Ausgestaltungen der Gegenstände der unabhängigen Ansprüche.

Die vorliegende Erfindung bezieht sich auf ein Verfahren zum Identifizieren eines Objektes als ein getarntes militärisches Objekt. Das Verfahren umfasst:
- Erfassen einer Anomalie in einem Magnetfeld in einem Bereich;
- Erfassen eines Bildes von dem Bereich;
- Erfassen von hochfrequenz-Signalen, HF-Signalen, von dem Bereich; und
- Analysieren des erfassten Bildes und/oder der erfassten HF-Signale, um das Objekt als ein getarntes militärisches Objekt in dem Bereich zu identifizieren.

Das Objekt kann unbeweglich (Gefechtstand, Gebäude) oder beweglich sein (Fahrzeugen wie Panzer oder LKW, U-Boote, Schiffe, Flugzeuge). Der Bereich ist das Gebiet oder die Umgebung oder das Gelände, in dem sich das Objekt befindet. Es kann die grobe oder ungefähre Position der Anomalie sein. Die Anomalie kann jede Abweichung (z.B. in Richtung und/oder Stärke) des Erdmagnetfeldes sein, wobei entsprechende Schwellenwerte genutzt werden können, um die Anomalie von natürlichen Schwankungen zu unterscheiden.

Optional werden die Schritte des Erfassens des optischen Bildes und/oder der HF-Signale nur ausgeführt, wenn eine Anomalie in dem Magnetfeld erfasst wurde.

Optional wird der Schritt des Erfassens von HF-Signalen von einer Radar-Anlage ausgeführt. Das Radar kann auch ein passiver Radar sein, bei dem keine HF-Signale ausgesandt werden, sondern nur Reflexionssignale empfangen werden (z.B. vom Mobilfunk, Funksignal für Radio- oder Fernsehempfang, DAB etc.). Optional nutzt der Schritt des Erfassens des Bildes zumindest eines der folgenden Spektralbereiche: sichtbares Licht, Infrarotstrahlung, Ultraviolettstrahlung.

Optional umfasst der Schritt des Analysierens ein Feststellen einer Tarnung, wenn zumindest eines der folgenden Tarnmerkmale für das Objektes vorliegt:
- Farbe, insbesondere Verwendung einer Tarnfarbe,
- Objekt ist unsichtbar,
- geringe oder fehlende Kontraste,
- Feststellen von Tarnnetzen oder Tarnplanen,
- Feststellen einer Tarnkappentechnik (sogenannte Stealth-Strukturen),
- Feststellen einer Absorption von Radarsignalen (oder nur bestimmte Frequenzen werden absorbiert),
- Reflexionsgrad für die HF-Signale liegt unterhalb eines Schwellenwertes,
- Reflexionsgrad für optische Signale liegt unterhalb eines weiteren Schwellenwertes (bzw. Absorptionsgrad liegt oberhalb einer Grenze).

Beispielsweise können hierzu entsprechende Bereiche oder konkrete Schwellenwert definiert werden.

Optional umfasst der Schritt des Analysierens ein Klassifizieren des Objektes in eine der folgenden Klassen:
- zivile Objekte,
- besonders schützenswerte Objekte (z.B. Rot-Kreuz),
- hochwertige militärische Objekte,
- normale militärische Objekte.

Die Klassifizierung kann basierend auf einen Grad der Tarnung erfolgen. So können hochwertige militärische Objekte so definiert werden, dass sie nur durch das Erfassen der Magnetfeldanomalie erkennbar sind, während zivile Objekt durch alle Sensoren erkennbar sein können. Normale militärische Objekte können als Objekte definiert werden, die magnetisch und mittels HF-Signale erfassbar sind. Wenn eine optische Tarnung festgestellt wird, handelt es sich um ein militärisches Objekt. Dann kann als nächster Schritt festgestellt werden, ob das militärische Objekt hochwertig ist oder ein normales militärische Objekt ist.

Optional umfasst das Verfahren weiter ein Auslösen von Gegenmaßnahmen basierend auf der Klassifizierung des Objektes. Die Gegenmaßnahmen können ein Bekämpfen des Objektes oder auch ein Auslösen eines Alarmes oder zumindest ein Erstelle eines Berichtes über das identifizierte militärische Objekt umfassen.

Optional erfolgt der Schritt des Erfassens der Anomalie in dem Magnetfeld unter Verwendung eines der folgenden Magnetfeldsensoren: einen supraleitenden Magnetfeldsensor, ein Quanteninterferenzgerät, einen magnetoresistiven Sensor, einen Hallsensor, eine beliebige Kombination daraus. Anomalien im Magnetfeld können hochsensitiv durch SQUID-Sensoren detektiert werden (supraleitende Quanteninterferenzsensoren).

Die Schritte des zuvor beschriebenen Verfahrens können durch nur eine oder auch verschiedene Sensoreinheiten ausgeführt werden. Optional wird zumindest einer der Schritte des Erfassens durch (nur) eine luftgestützte oder raumgestützte Sensorplattform ausgeführt. Außerdem können Magnetfeldmessung durch Drohnen in möglichst geringer Höhe erfolgen, während die Bilderfassung durch entfernte Sensoreinheiten ausgeführt werden kann.

Ausführungsbeispiele beziehen sich auch auf eine Sensorplattform, die Folgendes umfasst: einen Magnetfeldsensor, eine Bilderfassungseinheit, eine Empfangsanlage für hochfrequenz-Signale, HF-Signalen, und eine Auswerteeinheit. Der Magnetfeldsensor ist ausgebildet, um eine Anomalie in einem Magnetfeld in einem (räumlichen) Bereich zu erfassen. Die Bilderfassungseinheit ist ausgebildet, um ein Bild von dem Bereich zu erfassen oder zu erstellen. Die Empfangsanlage ist ausgebildet HF-Signale von dem Bereich zu empfangen. Die Auswerteinheit ist ausgebildet, um das erfasste Bild und/oder die erfassten HF-Signale auszuwerten und um eine Anwesenheit des militärischen Objektes in dem Bereich zu bestätigen oder auszuschließen.

Optional umfasst die Sensorplattform weiter eine Sendeanlage, die ausgebildet ist, um erfassten Werte an eine auswertende Einheit zu senden. Die Sendeanlage kann auch Empfangsmodul umfassen, um Daten zu empfangen.

Optional ist die Auswerteinheit weiter ausgebildet, um zumindest einen der Schritte des zuvor beschriebenen Verfahrens auszuführen oder deren Ausführung zu veranlassen.

Optional umfasst der Magnetfeldsensor zumindest einen aus den Folgenden Sensoren: ein supraleitender Magnetfeldsensor, ein Quanteninterferenzgerät, ein magnetoresistive Sensor, ein Hallsensor, eine Kombination daraus. Optional umfasst die Bilderfassungseinheit eine optische Kamera, eine Stereo-Kamera, eine IR-Kamera und/oder eine UV-Kamera. Optional umfasst die Empfangsanlage für HF-Signale eine Radar-Anlage (passive und/oder aktiv).

Ausführungsbeispiele beziehen sich auch auf einen Flugkörper mit einer der zuvor beschriebenen Sensorplattformen, wobei der Flugkörper bemannt oder unbemannt ist. Ein Flugkörper kann alles sein, was sich oberhalb der Erdoberfläche bewegt und umfasst z.B. einen Raumflugkörper wie ein Satellit, ein unbemanntes Flugfahrzeug (z.B. eine bewaffnete oder eine unbewaffnete Drohne), einen Hubschrauber, ein Flugzeug, eine Rakete.

Ausführungsbeispiele beziehen sich auch auf ein Fahrzeug zur Bewegung auf Land oder im Wasser, wobei das Fahrzeug eine der zuvor beschrieben Sensorplattformen aufweist und das Fahrzeug bemannt oder unbemannt ist.

Das beschriebene Verfahren oder zumindest Teile davon kann/können ebenfalls in Form von Anweisungen in Software oder auf einem Computerprogrammprodukt implementiert oder gespeichert sein, wobei gespeicherte Anweisungen in der Lage sind, die Schritte nach dem Verfahren auszuführen bzw. eine Steuereinheit/Auswerteeinheit zu veranlassen, zumindest einen Teil des Verfahrens auszuführen, wenn die Software auf einem Prozessor läuft. Daher bezieht sich die vorliegende Erfindung ebenfalls auf Computerprogrammprodukt mit darauf gespeichertem Software-Code (Softwareanweisungen), der ausgebildet ist, um eines der zuvor beschriebenen Verfahren auszuführen, wenn der Software-Code durch eine Verarbeitungseinheit ausgeführt wird. Die Verarbeitungseinheit kann jede Form von Computer oder Steuereinheit sein, die einen entsprechenden Mikroprozessor aufweist, der einen Software-Code ausführen kann.

Ausführungsbeispiele lösen zumindest ein Teil der obengenannten Probleme durch eine Sensorplattform zur Objektidentifizierung, die eine angepasste Anordnung von Sensoren und eine angepasste Auswertung der durch die Sensoren erfassten Sensorsignale umfasst. Hierzu umfasst die Sensorplattform mehrere Sensoren, wozu ein Sensor (Magnetfeldsensor) für eine magnetische Detektion von lokalen Anomalien des magnetischen Feldes (z.B. des Erdmagnetfeldes) benutzt werden kann. Ebenso können Sensoren (einschließlich der Bilderfassungseinheit) für eine optische Bilderfassung und zumindest ein Sensor eine HF-Signalerkennung (z.B. Empfangsanlage) vorhanden sein. Mittels einer Fusion der erhaltenen Sensordaten kann eine Unterscheidung zwischen zivilen und militärischen Objekten (z.B. Fahrzeugen) zuverlässig erfolgen.

Die Landsysteme können beispielsweise Panzer oder gepanzerte Fahrzeuge aber auch Artillerieanlagen oder andere zu militärischen Zwecken auf dem Land genutzten Einrichtungen oder Stellungen umfassen. Potenzielle zivile Objekte sind Traktoren, Bagger, Erntemaschinen, Autos oder auch Lastwagen. Eine weitere Objektklasse sind medizinisch genutzte Fahrzeuge (z.B. Rotkreuzfahrzeuge) oder andere besonders zu schützende Fahrzeuge. Es versteht sich, dass die vorliegende Erfindung nicht zwingenderweise auf Landsysteme einzuschränken ist, sondern ebenfalls beispielsweise für Seesysteme genutzt werden kann. Auch hier können Schiffe oder schwimmende Plattformen, die zivil genutzt werden, von militärisch genutzten Objekten (z.B. Militärschiffe) unterschieden werden. Ebenso ist es wünschenswert, wenn U-Booten innerhalb von Gewässern eindeutig als militärische U-Boote erkannt werden können.

Ausführungsbeispiele nutzen hierfür insbesondere die folgende Funktionsweise: Der Magnetfeldsensor erkennt eine Anomalie des Magnetfeldes. Hierbei kann noch nicht zwingenderweise zwischen einem militärischen und einem zivilen Objekt unterschieden werden, da auch zivile Objekte zu einer lokalen Anomalie des Magnetfeldes führen können (z.B., wenn sie viele Metallteile aufweisen). Wird jedoch gleichzeitig ein optisches und/oder ein beispielhaftes Radarsignal (HF-Signal) ausgewertet, kann mit großer Wahrscheinlichkeit festgestellt werden, ob es sich um ein ziviles oder ein militärisches Objekt handelt. Bei militärischen Objekten ist davon auszugehen ist, dass zumindest eine optische, evtl. auch eine Radartarnung vorhanden ist. Wird daher optisch und/oder mittels des HF-Sensors (z.B. Radar) beispielsweise nichts detektiert oder nur sehr schwach, handelt es sich um ein militärisches Fahrzeug, da zivile Maschinen wie Land- und Baumaschinen in der Regel gut optisch von der Umgebung unterscheidbar sind. Ebenso weisen zivile Systeme keine Radartarnung auf.

Zur optischen Tarnung bei militärischen Objekten können beispielsweise die folgenden Maßnahmen zählen: Verwendung einer Tarnfarbe, Nutzung eines Unterstandes, Nutzung von Tarnnetzen oder Tarnplanen (die über das eigentlich zu detektierende Objekt gelegt sind). Ebenso können Tarnungen für eine Infrarot-Kamera zu Einsatz kommen. Hierzu zählen beispielsweise Hitzeschilde oder Hitzekacheln. Es kann auch ein falsches Objektbild durch eine entsprechende Maske (für IR oder sichtbares Licht) erzeugt werden. Tarnungen für Radarsignale umfassen beispielsweise absorbierende Materialien auf der Oberfläche des Objektes oder sogenannte Stealth-Maßnahmen (z.B. gezielte Reflektionen in andere Richtungen als die Einfallsrichtung).

Ausführungsbeispiele weisen die folgenden Vorteile auf: Eine zuverlässige Erkennung von getarnten militärischen Objekten, wie Landsystemen oder Seesystemen, wird ermöglicht. Außerdem kann eine zuverlässige Klassifizierung von zivilen und militärischen Objekten erfolgen. Auf diese Weise können zivile Schäden durch Waffensysteme zuverlässig verhindert werden und gleichzeitig vermehrt getarnte militärische Systeme gekämpft werden.

### KURZBESCHREIBUNG DER FIGUREN

Die Ausführungsbeispiele werden besser verstanden anhand der folgenden detaillierten Beschreibung und den beiliegenden Zeichnungen der unterschiedlichen Ausführungsbeispiele, die jedoch nicht so verstanden werden sollten, dass sie die Offenbarung auf die spezifischen Ausführungsformen einschränken, sondern lediglich der Erklärung und dem Verständnis dienen.
- Fig. 1: zeigt ein schematisches Flussdiagramm für ein Verfahren zur Objektidentifizierung gemäß einem Ausführungsbeispiel der vorliegenden Erfindung.
- Fig. 2: zeigt beispielhaft einen Einsatz einer Sensorplattform gemäß Ausführungsbeispielen.
- Fig. 3: zeigt ein beispielhaftes Ablaufschema zur Klassifizierung von Objekten, wie sie Ausführungsbeispiele durchführen.

### DETAILLIERTE BESCHREIBUNG

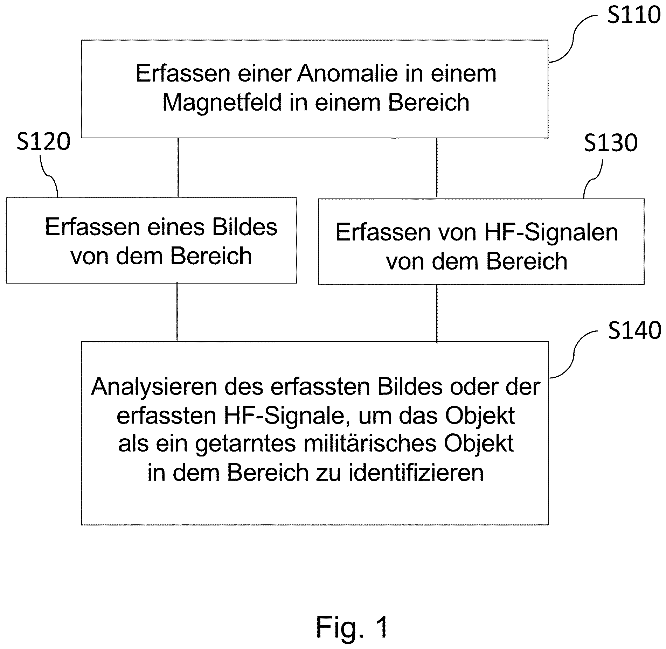

**Fig. 1** zeigt ein schematisches Flussdiagramm für ein Verfahren zur Objektidentifizierung. Das Verfahren umfasst:
- Erfassen Sno einer Anomalie in einem Magnetfeld in einem Bereich;
- Erfassen S120 eines Bildes von dem Bereich;
- Erfassen S130 von hochfrequenz-Signalen, HF-Signalen, von dem Bereich; und
- Analysieren S140 des erfassten Bildes oder der erfassten HF-Signale, um das Objekt als ein getarntes militärisches Objekt in dem Bereich zu identifizieren.

Die Identifizierung oder Klassifizierung kann beispielsweise wie folgt erfolgen: Zunächst kann die magnetische Anomalie erfasst werden (Schritt Sno), da das Vorhandensein einer größeren Menge von metallischen Strukturen zu einer lokalen Änderung des Erdmagnetfeldes führt und die militärischen Objekte von Interesse in der Regel größere Mengen an Metall aufweisen. Diese Anomalie kann über hochsensitive Magnetfeldsensoren erfasst werden, die entsprechende Sensorsignale liefern, wenn in dem Bereich Materialien sind, die das Magnetfeld ändern.

Basierend auf diesen Daten kann noch nicht unterschieden werden, ob es sich dabei um ein ziviles oder ein militärisches Objekt handelt. Um diese Frage zu beantworten, werden zusätzliche Sensorsignale von einer Bilderfassungseinheit und/oder einer Empfangseinheit für HF-Signale genutzt. Es können beide Sensordaten oder nur eine der beiden Sensordaten genutzt werden. So könnten beispielsweise Bilddaten ausreichen, um bereits eindeutig festzustellen, dass es sich bei dem Objekt um ein ziviles Objekt handelt (z.B. eine Landmaschine). Unter Umständen kann auch ein militärisches Objekt eindeutig in Bilddaten erkannt werden. Wenn jedoch das optische Bild noch keine eindeutige Feststellung erlaubt, können die weitere Sensoren genutzt werden.

Wenn das optische Bild nur das sichtbare Spektrum umfasst, könnten zusätzlich auch noch Infrarot-Daten (z.B. einer IR-Kamera) genutzt werden, um eine Wärmestrahlung zu untersuchen. Darüber hinaus können aber HF-Signale (z.B. Radarsignale) eindeutige Detektionssignale für ein Objekt liefern. So können optische Tarnungen oft mit Radarsignalen umgangen werden, sodass basierend darauf mit hoher Wahrscheinlichkeit festgestellt werden kann, ob es sich dabei um ein (getarntes) militärisches Objekt handelt oder nicht. Bei allen zivilen Zielen ist davon auszugehen, dass eine größere Ansammlung von metallischen Strukturen eindeutig mit Radaranlagen detektierbar sind.

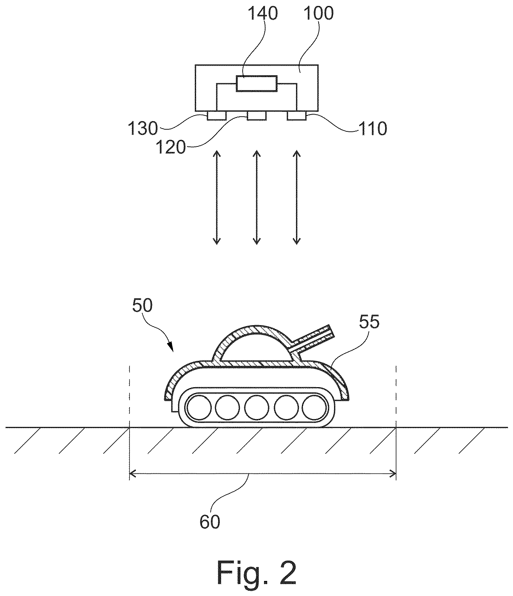

**Fig. 2** zeigt eine Sensorplattform 100 gemäß Ausführungsbeispielen und deren Einsatz zur Identifikation von militärischen Objekten 50. Die Sensorplattform 100 ist ausgebildet, um einen Objektkandidaten als ein militärisches Objekt zu identifizieren. Hierzu umfasst die Sensorplattform 100 einen Magnetfeldsensor 110, eine Bilderfassungseinheit 120, eine HF-Empfangsanlage 130 und eine Auswerteeinheit 140. Der Magnetfeldsensor 110 ist ausgebildet, um eine Anomalie in einem Magnetfeld in einem Bereich 60 zu erfassen. Der Bereich 60 bezieht sich dabei beispielhaft auf eine Region oder Terrain auf der Erdoberfläche, in welchem sich ein potenzielles militärisches Objekt 50 befindet.

Die Sensorplattform 100 umfasst weiter eine Bilderfassungseinheit 120, die ausgebildet ist, um ein Bild von dem Bereich 60 zu erfassen. Die Bilderfassungseinheit 120 ist im einfachsten Fall eine Kamera, wobei die Kamera nicht nur den sichtbaren Spektralbereich bildlich darstellt, sondern ebenfalls oder alternativ eine Infrarot (IR)-Kamera oder eine Ultraviolett (UV)-Kamera sein kann oder diese zusätzlich umfassen kann. So kann beispielsweise über eine Infrarot-Kamera ein Wärmebild von dem Bereich 60 verstellt werden, um beispielsweise eine Wärmequelle in dem Bereich 60 sichtbar zu machen. Viele militärische Objekte, insbesondere Fahrzeuge, erzeugen eine große Menge an Wärme, die sich über eine Infrarot-Kamera sehr gut detektieren lässt.

Die Sensorplattform 100 umfasst außerdem eine HF-Empfangsanlage 130 für den Empfang von Hochfrequenzsignalen (HF-Signalen), um den Bereich 60 auch hinsichtlich HF-Strahlung abzutasten. Die Sensorplattform 100 kann ebenfalls eine entsprechen Sendeanlage für HF-Signal umfassen. Insbesondere handelt es sich hierbei um eine Radaranlage, die ein Radarbild von dem Gebiet 60 erstellen kann. Die beispielhafte Radaranlage 130 kann dabei sensitiv für verschiedenste Wellenlängen sein, um ganz gezielt die Durchlässigkeit von Materialien hinsichtlich bestimmte Radarsignale auszunutzen bzw. zu umgehen. Bei der Radaranalage 130 handelt es sich nicht zwingenderweise um ein aktives Radarsystem (mit einem Sender und einem Empfänger). Es kann auch ein passives Radarsystem 130 sein oder dieses umfassen, wobei das passive Radarsystem 130 selbst keine Signale aussendet, sondern nur reflektierte elektromagnetische Wellen erfasst, worunter z.B. zumindest eine der Folgende Signale fallen: Radiowellen (lange Wellen, kurze Wellen, mittlere Wellen), Fernsehsignale (UHF, VHF, ...), Mobilfunksignale, digitale Audiosender (DAB), andere elektromagnetische Funkwellen (die nahezu überall auf der Erde existiert). Aus der empfangenen Signatur kann die Empfangsanlage 130 Rückschüsse ziehen, ob sich in dem Bereich 60 ein Objekt 50 findet, welches die genannten HF-Signale reflektiert hat.

Die Sensorplattform 100 umfasst schließlich eine Auswerteeinheit 140, die die entsprechenden Sensorsignale von dem Magnetfeldsensor 110 und/oder der Bilderfassungseinheit 120 und/oder die HF-Signale bzw. von den Sensoren 110, 120, 130 aufbereitete Detektionssignal empfängt, um basierend darauf eine Klassifizierung des Objektes 50 vorzunehmen.

Bei militärischen Objekten 50 kann davon ausgegangen werden, dass diese zumindest eine Tarnung 55 aufweisen. Dabei kann es sich zum Beispiel um eine Oberflächenbeschichtung handeln. Damit kann z. B. die Farbe des militärischen Objektes an eine Umgebung anpasst werden, um so den Kontrast im Bild zu verringern. Ebenso kann die Tarnung 55 darin bestehen, dass zusätzlichen Netze, Planen oder Hüllen vorhanden sind, die das militärische Objekt 50 bedecken oder es verstrecken. Die Tarnung 55 kann auch darin bestehen, dass auftreffende Radarsignale durch absorbierende Materialien auf der Oberfläche des Objektes 50 unterdrückt oder gedämpft werden. Eine andere mögliche Tarnung 55 besteht darin, dass die Oberfläche so geformt ist, dass die Radarsignale in andere Richtungen gesendet werden und gerade nicht zu der Empfangsanlage 130 für Radarsignale zurück reflektiert werden (sogenannte Stealth-Strukturen).

Auch ein Infrarot Spektrum kann getarnt oder verfälscht werden. So kann die erzeugte Wärme über entsprechende Hitzeschilde absorbiert (getarnt) werden, so dass die Infrarot-Kamera nur ein schlechtes oder kein Infrarot-Bild von dem Bereich 60 erstellen kann bzw. das entsprechende Bild kein Hinweis auf ein dortiges Objekt 50 liefert. Die Hitzeschilde können beispielsweise Kachelstrukturen oder andere Infrarot absorbierende Materialien umfassen, die die erzeugte Wärme großflächig verbreiten bzw. eine Hitzestrahlung absorbieren. Eine Hitzeschildstruktur kann auch ein anderes Objekt vortäuschen (z.B. einen Traktor anstatt eines Panzers).

Es ist jedoch schwer oder unmöglich, eine Tarnung für magnetische Anomalien des Erdmagnetfeldes zu erreichen, die durch magnetische Materialien erzeugt werden. Diese können z.B. von Werkstoffen mit einer relativen Permeabilität µᵣ von ungleich 1 oder deutlich größer als 1 hervorgerufen werden, wozu beispielsweise ferromagnetische oder ferrimagnetische Stoffe zählen. Daher kann als erstes der Magnetfeldsensor 110 eingesetzt werden, um zunächst Gebiete 60 von Interesse zu identifizieren. Daran anschließend kann dann die Verifizierung durch die anderen Sensoren (Bilderfassung, Radar, etc.) erfolgen.

Gemäß weiteren Ausführungsbeispielen kann bei der Objektidentifizierung auch der militärische Wert der Fahrzeuge oder Objekte 50 abgeschätzt werden, wobei hierbei festgestellt werden kann, ob das Objekt 50 ein höherwertiges Objekt ist (wie z.B. ein Panzer) oder ob es sich um ein "gewöhnliches" militärisches Objekt wie beispielsweise einen militärischen Lastkraftwagen handelt. Eine zusätzliche Radartarnung und/oder IR-Tarnung wird nämlich typischerweise nur auf hochwertigen militärischen Objekten 50 aufgebracht, während "normale" Militärkraftfahrzeuge oft nur eine optische Tarnung durch Farbe und/oder Tarnnetze aufweisen.

Daher beziehen sich Ausführungsbeispiele auch auf eine Klassifizierung der militärischen Objekte, beispielsweise in normalen militärischen Zielen oder Objekten und in hochwertigen militärischen Objekten. Diese Information kann beispielsweise dazu genutzt werden, um entsprechende Gegenmaßnahmen oder einen Angriff zu planen oder zu priorisieren. Außerdem können entsprechende Informationen zu hochwertigen militärischen Objekten an eine Leitstelle weitergegeben werden.

Die Sensorplattform 100 kann auf einen Flugkörper installiert sein oder auf ein Fahrzeug. Der Flugkörper kann beispielsweise alles umfassen, was sich oberhalb der Erdoberfläche bewegt, einschließlich eines Satelliten, der in einer mehr oder wenig niedrigen Umlaufbahn die Erde umkreist. Der Flugkörper kann auch ein unbemanntes Flugfahrzeug (z.B. Drohnen) oder ein bemannte Flugfahrzeug (z.B. Helikopter, Flugzeuge) sein. Der Flugkörper kann ebenfalls eine Rakete oder andere Munition sein, die eine zusätzliche Sensorplattform 100 tragen könnte. Die Drohne oder das Flugfahrzeug kann dabei bewaffnet oder unbewaffnet sein. Als Fahrzeug kann jedes Fahrzeug dienen, welches eine Bewegung auf Land oder auf Wasser erlaubt. Beispielsweise ist es mit der Sensorplattform 100 ebenfalls möglich, dass Objekte auf See oder unter See als solche klassifiziert werden können. Hierzu gehören beispielsweise U-Boote oder andere militärische Schiffe. Bei den unbeweglichen Zielen kann es sich um militärische Installationen wie Flugleitstellen oder Radarsysteme handeln, die ebenfalls identifiziert werden und entsprechend klassifiziert werden könnten.

Das oben beschriebene Verfahren kann ebenfalls Computer-implementiert sein, d.h. es kann durch Anweisungen umgesetzt sein, die auf einem Speichermedium gespeichert sind und in der Lage sind, die Schritte des Verfahrens oder ein Teil davon auszuführen, wenn es auf einem Prozessor läuft. Die Anweisungen umfassen typischerweise eine oder mehrere Anweisungen, die auf unterschiedliche Art auf unterschiedlichen Medien in oder peripher zu einer Datenverarbeitungseinheit (mit einem Prozessor) gespeichert sein können, die, wenn sie gelesen und durch die Datenverarbeitungseinheit ausgeführt werden, die Datenverarbeitungseinheit dazu veranlassen, Funktionen, Funktionalitäten und Operationen auszuführen, die zum Ausführen eines Verfahrens gemäß Ausführungsbeispielen notwendig sind. Die Datenverarbeitungseinheit kann beispielsweise die Auswerteeinheit 140 der Sensorplattform sein.

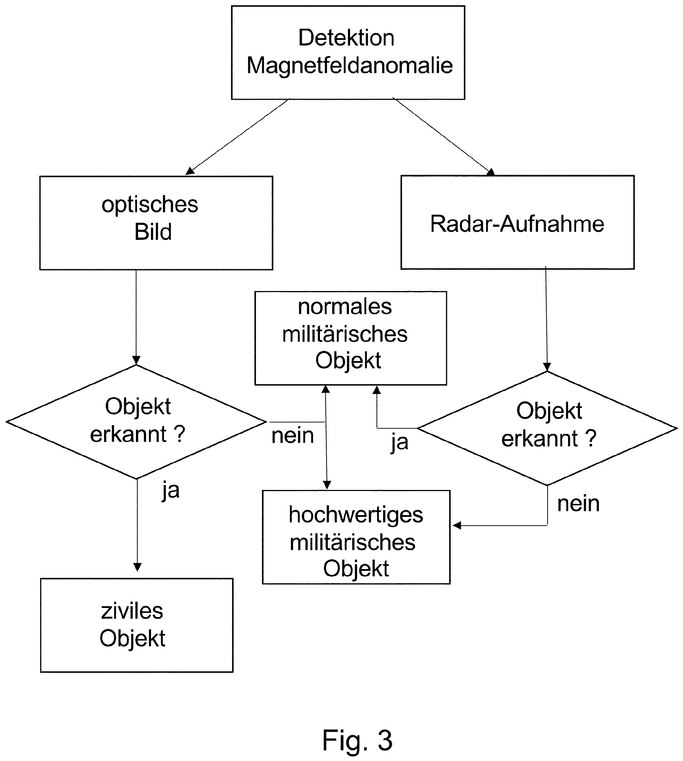

**Fig. 3** zeigt ein Ausführungsbeispiel für eine Klassifizierung hinsichtlich militärischer und ziviler Objekte, wobei angenommen wird, dass es sich bei der HF-Empfangsanlage 130 um eine Radaranlage handelt.

In einem ersten Schritt 310 erfolgt eine Detektion mit dem Magnetfeldsensor 110. Wenn der Magnetfeldsensor 110 in einer Bereich 60 eine magnetische Anomalie festgestellt, gibt er ein Detektionssignal aus. Dies kann beispielsweise durch ein Überschreiten eines Grenzwertes, der natürliche Fluktuationen berücksichtigt, ausgelöst werden. Dieses Signal braucht nur den Bereich 60 zu identifizieren, wo die Anomalie festgestellt wurde. Optional können noch weitere Information wie Stärke, Zeitpunkt, Bewegung der Anomalie etc. bereitgestellt werden. Dieses Detektionssignal kann an die Auswerteeinheit 140 geschickt werden, die daraufhin die Bilderfassungseinheit 120 veranlasst ein optisches Bild von der Region 60 zu erstellen (Schritt 320). Zusätzlich oder alternativ kann die Auswerteeinheit 140 die die Radaranlage 130 veranlassen, eine Radar-Aufnahme von dem Bereich 60 zu erstellen (Schritt 330).

Das optische Bild kann ein Kamerabild, ein IR-Bild und/oder ein UV-Bild sein und wird für eine Objekterkennung genutzt. Wenn die Objekterkennung im Schritt 340 ein Objekt 60 erkennt und dieses Objekt keine Tarnung 55 aufweist oder klar als ziviles Ziel erkennbar ist, erfolgt im Schritt 380 die Einstufung der detektierten Magnetfeldanomalie als ein ziviles Objekt. Wenn in dem optischen Bild kein Objekt identifiziert wird, hat das Objekt 50 eine optische Tarnung 55 und es handelt sich um ein militärisches Objekt 50.

Die Radaranlage 130 kann nun genutzt werden, um eine Wertigkeit des militärischen Objektes 50 zu bestimmen. Zusätzlich kann die Radaraufnahme auch die optische Detektion des Objektes 50 bestätigen. Hierzu wird wiederum eine Objekterkennung an der Radaraufnahme durchgeführt (siehe Schritt 350). Wenn in dem Schritt 350 ein Objekt identifiziert, weist das Objekt 50 keine Tarnung für Radarsignale auf und in Kombination mit einem nichterkannten Objekt im optischen Bild, wird im Schritt 360 die Schlussfolgerung gezogen, dass es ein normales militärisches Objekt 50 ist (d.h. es hat eine optische, aber keine Radartarnung). Wenn im Schritt 350 kein Objekt identifiziert wird, weist das Objekt 50 eine Tarnung für Radarsignale auf und in Kombination mit einem nichterkannten Objekt im optischen Bild, wird dann im Schritt 370 die Schlussfolgerung gezogen, dass es ein hochwertiges militärisches Objekt 50 ist (d.h. es sowohl eine optische als auch ein Radartarnung).

Gemäß weiteren Ausführungsbeispielen kann die Auswertung der Radaraufnahme auch weggelassen werden. Beispielsweise könnte das optische Bild bereits klar das Ziel als solches erkennen und als militärisch oder zivil einstufen.

Die in der Fig. 3 gezeigten Schritte können durch die Auswerteeinheit 140 ausgeführt werden, die beispielsweise über entsprechend installierte Software dazu ausgebildet ist.

Mit der so durchgeführten Klassifizierung der Objekte 50 kann beispielsweise eine Gegenmaßnahme geplant werden. Ebenso kann diese Information an eine Leitstelle weitergegeben werden. So ist es beispielsweise möglich, dass direkt von der Sensorplattform 100 bzw. dem entsprechenden Flugfahrzeug, an dem die Sensorplattform 100 befestigt ist, sofort selbständig eine Objektbekämpfung veranlasst wird bzw. optional erst nach einer Bestätigung durch eine beispielhafte Leitstelle.

Gemäß weiterer Ausführungsbeispiele werden bei der optischen Bilderkennung die unterschiedlichen Spektralbereich separat behandelt, z.B. eine Objekterkennung im sichtbaren Spektrum (Licht), eine Objekterkennung im IR-Spektralbereich bzw. im UV-Bereich. Damit können zusätzliche Informationen erhalten werden (z.B. ob ein Fahrzeug noch heiß ist oder schon länger steht).

Gemäß weiterer Ausführungsbeispiele werden bei der Klassifizierung ausdrücklich Fahrzeuge oder Objekte als zu schützende Objekte erkannt und als solche klassifiziert. Hierunter fallen beispielsweise Rotkreuzfahrzeuge oder andere medizinisch genutzte Fahrzeuge.

Es versteht sich, dass alle zuvor beschriebenen Funktionen der Sensorplattform 100 als weitere optionale Verfahrensschritte ausgebildet sein können. Außerdem versteht es sich, dass die Reihenfolge der Nennung nicht notwendigerweise eine Reihenfolge bei der Ausführung der Verfahrensschritte ist. Die Schritte können auch in einer anderen Reihenfolge ausgeführt werden bzw. es wird nur ein Teil der Verfahrensschritte ausgeführt
Die in der Beschreibung, den Ansprüchen und den Figuren offenbarten Merkmale der Erfindung können sowohl einzeln als auch in beliebiger Kombination für die Verwirklichung der Erfindung wesentlich sein.

### BEZUGSZEICHENLISTE

- 50: Objekt (militärisch oder zivil)
- 55: Tarnung des Objektes (optisch, IR, Radar etc.)
- 60: Bereich oder Region des Objektes (z.B. eine grobe Position)
- 100: Sensorplattform
- 110: Magnetfeldsensor
- 120: Bilderfassungseinheit (z.B. Kamera, IR-Sensor, UV-Sensor, LIDAR)
- 140: Auswerteinheit / Sende-Empfangseinheit
- S110 ... S140: Schritte einer Identifizierung von militärischen Zielen
- 310 ...380: Schritte einer Objektklassifizierung

## Patentansprüche

1. Ein Verfahren zum Identifizieren eines Objektes als ein getarntes militärisches Objekt (50), das Verfahren umfasst:
Erfassen (S110) einer Anomalie in einem Magnetfeld in einem Bereich (60);
Erfassen (S120) eines Bildes von dem Bereich (60);
Erfassen (S130) von hochfrequenz-Signalen, HF-Signalen, von dem Bereich (60); und
Analysieren (S140) des erfassten Bildes oder der erfassten HF-Signale, um das Objekt als ein getarntes militärisches Objekt (50) in dem Bereich (60) zu identifizieren.

2. Das Verfahren nach Anspruch 1, wobei die Schritte des Erfassens (S110, S120) des optischen Bildes und der HF-Signale nur ausgeführt werden, wenn eine Anomalie in dem Magnetfeld erfasst wurde.

3. Das Verfahren nach Anspruch 1 oder Anspruch 2, wobei:
der Schritt des Erfassens (S120) von HF-Signalen von einer Radar-Anlage ausgeführt wird; oder
der Schritt des Erfassens (S110) des Bildes zumindest eines der folgenden Spektralbereiche nutzt: sichtbares Licht, Infrarotstrahlung, Ultraviolettstrahlung.

4. Das Verfahren nach einem der Ansprüche 1 bis 3, wobei der Schritt des Analysierens (S130) ein Feststellen einer Tarnung (55) umfasst, wenn zumindest eines der folgenden Tarnmerkmale für das Objektes vorliegt:
- Farbe, insbesondere Verwendung einer Tarnfarbe,
- Objekt ist unsichtbar,
- geringe oder fehlende Kontraste,
- Feststellen von Tarnnetzen oder Tarnplanen,
- Feststellen einer Tarnkappentechnik,
- Feststellen einer Absorption von Radarsignalen,
- Reflexionsgrad für die HF-Signale liegt unterhalb eines Schwellenwertes,
- Reflexionsgrad für optische Signale liegt unterhalb eines weiteren Schwellenwertes.

5. Das Verfahren nach einem der Ansprüche 1 bis 4, wobei der Schritt des Analysierens (S130) ein Klassifizieren des Objektes (50) in eine der folgenden Klassen umfasst:
- zivile Objekte,
- besonders schützenswerte Objekte,
- hochwertige militärische Objekte,
- normale militärische Objekte,
wobei die Klassifizierung basierend auf einen Grad der Tarnung erfolgt.

6. Das Verfahren nach Anspruch 5, das weiter ein Auslösen von Gegenmaßnahmen basierend auf der Klassifizierung des Objektes (50) umfasst.

7. Das Verfahren nach einem der Ansprüche 1 bis 6, wobei der Schritt des Erfassens (S110) der Anomalie in dem Magnetfeld unter Verwendung eines der folgenden Magnetfeldsensoren erfolgt: einen supraleitenden Magnetfeldsensor, ein Quanteninterferenzgerät, einen magnetoresistiven Sensor, einen Hallsensor, eine beliebige Kombination daraus.

8. Das Verfahren nach einem der Ansprüche 1 bis 7, wobei zumindest einer der Schritte des Erfassens (S110, S120) durch eine luftgestützte oder raumgestützte Sensorplattform ausgeführt wird.

9. Eine Sensorplattform (100) umfassend:
einen Magnetfeldsensor (110), der ausgebildet ist, um eine Anomalie in einem Magnetfeld in einem Bereich (60) zu erfassen;
eine Bilderfassungseinheit (120), die ausgebildet ist, um ein Bild von dem Bereich (60) zu erfassen;
eine Empfangsanlage (130) für hochfrequenz-Signale, HF-Signalen, von dem Bereich (60); und
eine Auswerteinheit (140), die ausgebildet ist, um das erfasste Bild oder die erfassten HF-Signale auszuwerten, um eine Anwesenheit des militärischen Objektes (50) in dem Bereich (60) zu bestätigen.

10. Eine Sensorplattform (100) nach Anspruch 9, die weiter eine Sendeanlage umfasst, die ausgebildet ist, um erfassten Werte an eine auswertende Einheit zu senden.

11. Die Sensorplattform (100) nach Anspruch 9 oder Anspruch 10, wobei die Auswerteinheit (140) weiter ausgebildet ist, um zumindest einen der Schritte des Verfahrens nach einem der Ansprüche 1 bis 8 auszuführen oder deren Ausführung zu veranlassen.

12. Die Sensorplattform (100) nach einem der Ansprüche 9 bis 11, wobei zumindest eines aus dem Folgenden erfüllt ist:
der Magnetfeldsensor (110) ist zumindest einen aus den Folgenden umfasst: ein supraleitender Magnetfeldsensor, ein Quanteninterferenzgerät, ein magnetoresistive Sensor, ein Hallsensor, eine Kombination daraus,
die Bilderfassungseinheit (120) umfasst eine optische Kamera oder eine IR-Kamera oder eine UV-Kamera oder einen LIDAR,
die Empfangsanlage (130) für HF-Signale umfasst eine Radaranlage.

13. Ein Flugkörper mit der Sensorplattform (100) nach einem der Ansprüche 9 bis 12, wobei der Flugkörper bemannt oder unbemannt ist.

14. Ein Fahrzeug zur Bewegung auf Land oder im Wasser, wobei das Fahrzeug die Sensorplattform (100) nach einem der Ansprüche 9 bis 12 aufweist und das Fahrzeug bemannt oder unbemannt ist.

15. Computerlesbares Speichermedium mit darauf gespeicherter Software, die ausgebildet ist, um die Auswerteinheit, wie sie im Anspruch 9 definiert ist, dazu zu veranlassen das Verfahren nach Anspruch 1 auszuführen, wenn die Software auf der Auswerteeinheit ausgeführt wird.

## Geänderte Patentansprüche

### Geänderte Patentansprüche gemäss Regel 137(2) EPÜ.

1. Ein Verfahren zum Identifizieren eines Objektes als ein getarntes militärisches Objekt (50), das Verfahren umfasst:
Erfassen (S110) einer Anomalie in einem Magnetfeld in einem Bereich (60);
Erfassen (S120) eines Bildes von dem Bereich (60);
Erfassen (S130) von hochfrequenz-Signalen, HF-Signalen, von dem Bereich (60); und
Analysieren (S140) des erfassten Bildes oder der erfassten HF-Signale, um das Objekt als ein getarntes militärisches Objekt (50) in dem Bereich (60) zu identifizieren,
wobei die Anomalie jede Abweichung des Erdmagnetfeldes ist.

2. Das Verfahren nach Anspruch 1, wobei die Schritte des Erfassens (S110, S120) des optischen Bildes und der HF-Signale nur ausgeführt werden, wenn eine Anomalie in dem Magnetfeld erfasst wurde.

3. Das Verfahren nach Anspruch 1 oder Anspruch 2, wobei:
der Schritt des Erfassens (S120) von HF-Signalen von einer Radar-Anlage ausgeführt wird; oder
der Schritt des Erfassens (S110) des Bildes zumindest eines der folgenden Spektralbereiche nutzt: sichtbares Licht, Infrarotstrahlung, Ultraviolettstrahlung.

4. Das Verfahren nach einem der Ansprüche 1 bis 3, wobei der Schritt des Analysierens (S130) ein Feststellen einer Tarnung (55) umfasst, wenn zumindest eines der folgenden Tarnmerkmale für das Objektes vorliegt:
- Farbe, insbesondere Verwendung einer Tarnfarbe,
- Objekt ist unsichtbar,
- geringe oder fehlende Kontraste,
- Feststellen von Tarnnetzen oder Tarnplanen,
- Feststellen einer Tarnkappentechnik,
- Feststellen einer Absorption von Radarsignalen,
- Reflexionsgrad für die HF-Signale liegt unterhalb eines Schwellenwertes,
- Reflexionsgrad für optische Signale liegt unterhalb eines weiteren Schwellenwertes.

5. Das Verfahren nach einem der Ansprüche 1 bis 4, wobei der Schritt des Analysierens (S130) ein Klassifizieren des Objektes (50) in eine der folgenden Klassen umfasst:
- zivile Objekte,
- besonders schützenswerte Objekte,
- hochwertige militärische Objekte,
- normale militärische Objekte,
wobei die Klassifizierung basierend auf einen Grad der Tarnung erfolgt.

6. Das Verfahren nach Anspruch 5, das weiter ein Auslösen von Gegenmaßnahmen basierend auf der Klassifizierung des Objektes (50) umfasst.

7. Das Verfahren nach einem der Ansprüche 1 bis 6, wobei der Schritt des Erfassens (S110) der Anomalie in dem Magnetfeld unter Verwendung eines der folgenden Magnetfeldsensoren erfolgt: einen supraleitenden Magnetfeldsensor, ein Quanteninterferenzgerät, einen magnetoresistiven Sensor, einen Hallsensor, eine beliebige Kombination daraus.

8. Das Verfahren nach einem der Ansprüche 1 bis 7, wobei zumindest einer der Schritte des Erfassens (S110, S120) durch eine luftgestützte oder raumgestützte Sensorplattform ausgeführt wird.

9. Eine Sensorplattform (100) umfassend:
einen Magnetfeldsensor (110), der ausgebildet ist, um eine Anomalie in einem Magnetfeld in einem Bereich (60) zu erfassen;
eine Bilderfassungseinheit (120), die ausgebildet ist, um ein Bild von dem Bereich (60) zu erfassen;
eine Empfangsanlage (130) für hochfrequenz-Signale, HF-Signalen, von dem Bereich (60); und
eine Auswerteinheit (140), die ausgebildet ist, um das erfasste Bild oder die erfassten HF-Signale auszuwerten, um eine Anwesenheit des militärischen Objektes (50) in dem Bereich (60) zu bestätigen,
wobei die Anomalie jede Abweichung des Erdmagnetfeldes ist.

10. Eine Sensorplattform (100) nach Anspruch 9, die weiter eine Sendeanlage umfasst, die ausgebildet ist, um erfassten Werte an eine auswertende Einheit zu senden.

11. Die Sensorplattform (100) nach Anspruch 9 oder Anspruch 10, wobei die Auswerteinheit (140) weiter ausgebildet ist, um zumindest einen der Schritte des Verfahrens nach einem der Ansprüche 1 bis 8 auszuführen oder deren Ausführung zu veranlassen.

12. Die Sensorplattform (100) nach einem der Ansprüche 9 bis 11, wobei zumindest eines aus dem Folgenden erfüllt ist:
der Magnetfeldsensor (110) ist zumindest einen aus den Folgenden umfasst: ein supraleitender Magnetfeldsensor, ein Quanteninterferenzgerät, ein magnetoresistive Sensor, ein Hallsensor, eine Kombination daraus,
die Bilderfassungseinheit (120) umfasst eine optische Kamera oder eine IR-Kamera oder eine UV-Kamera oder einen LIDAR,
die Empfangsanlage (130) für HF-Signale umfasst eine Radaranlage.

13. Ein Flugkörper mit der Sensorplattform (100) nach einem der Ansprüche 9 bis 12, wobei der Flugkörper bemannt oder unbemannt ist.

14. Ein Fahrzeug zur Bewegung auf Land oder im Wasser, wobei das Fahrzeug die Sensorplattform (100) nach einem der Ansprüche 9 bis 12 aufweist und das Fahrzeug bemannt oder unbemannt ist.

15. Computerlesbares Speichermedium mit darauf gespeicherter Software, die ausgebildet ist, um die Auswerteinheit, wie sie im Anspruch 9 definiert ist, dazu zu veranlassen das Verfahren nach Anspruch 1 auszuführen, wenn die Software auf der Auswerteeinheit ausgeführt wird.
